Europäisches Patentamt

European Patent Office

Office européen des brevets

(11) Publication number: 0 502 306 A2

# EUROPEAN PATENT APPLICATION

(21) Application number: 92101222.5

(22) Date of filing: 27.01.92

(51) Int. Cl.5: G01L 9/00

(30) Priority: 04.03.91 US 663536

(43) Date of publication of application:
09.09.92 Bulletin 92/37

(84) Designated Contracting States:
DE FR GB

(71) Applicant: MOTOROLA, INC.
1303 East Algonquin Road
Schaumburg, IL 60196(US)

(72) Inventor: Ristic, Ljubisa
8809 S. Pointe Parkway East, Nr. 1056
Phoenix, Arizona 86044(US)
Inventor: Secco-D'Aragona, Frank
8642 E. San Jacinto
Scottsdale, Arizona 85258(US)
Inventor: Roop, Raymond M.
6302 E. Gold Dust
Scottsdale, Arizona 85253(US)

(74) Representative: Lupton, Frederick et al
Motorola European Intellectual Property
Operations Jays Close Viables Industrial
Estate
Basingstoke, Hants RG22 4PD(GB)

(54) Wafer-bonded semiconductor sensor.

(57) A wafer-bonded semiconductor sensor (42) includes a first semiconductor substrate (44) having a cavity (48) formed in a first surface (46) thereof and a second semiconductor substrate (54) bonded to the first surface (46) of the first substrate (44) so that the portion of the second substrate (54) disposed above the cavity (48) operates as a diaphragm (56). A specific embodiment of this invention employs an insulating layer (58) between the first (44) and second (54) substrates so that a silicon-on-insulator sensor is obtained.

FIG. 2

EP 0 502 306 A2

## Field of the Invention

This invention relates, in general, to semiconductor devices and more particularly to a wafer-bonded semiconductor sensor.

## Background of the Invention

Integrated semiconductor pressure sensors are well known in the art. These sensors are employed for various applications and are prominently used in the automobile industry and others. An integrated pressure sensor most generally comprises a diaphragm, disposed over a cavity, and a signal processing circuit.

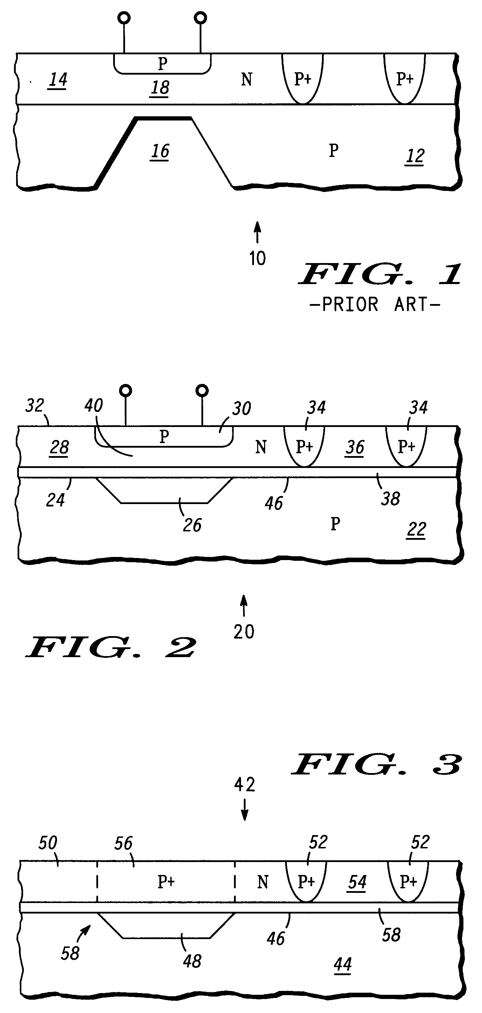

A highly enlarged cross-sectional view of a prior art pressure sensor 10 is depicted by FIG. 1. Pressure sensor 10 includes a wafer 12. Wafer 12 comprises P-type monocrystalline silicon. An N-type epitaxial silicon layer 14 of a desired thickness is formed on wafer 12. A cavity 16 is then formed in wafer 12. Cavity 16 opens away from epitaxial layer 14. Cavity 16 is formed by an anisotropic potassium hydroxide (KOH) etch and typically has a depth on the order of 375 micrometers. The depth of cavity 16 is of course dependent upon the thickness of wafer 12.

The portion of wafer 12 and epitaxial layer 14 disposed above cavity 16 comprise the diaphragm 18. Diaphragm 18 is typically on the order of 25 micrometers thick. The sensitivity of pressure sensor 10 is dependent upon the thickness of diaphragm 18. When increased sensitivity is desired, the thickness of diaphragm 18 must be reduced. When the thickness of diaphragm 18 is reduced, the open cavity 16 design of sensor 10 causes it to become extremely fragile and handling becomes very difficult. Increased breakage greatly reduces the yield and increases costs.

The open cavity 16 design of pressure sensor 10 limits its applicabiity. Because cavity 16 is open, sensor 10 cannot be used as an absolute mode sensor unless cavity 16 is sealed and maintained under vacuum. This would require bonding of another wafer or another similar process to seal cavity 16. Additionally, because epitaxial layer 14 containing the circuitry is not dielectrically isolated from wafer 12, the performance of sensor 10 is inhibited by parasitics, latch-up problems exist, hardness radiation and increased package density are sacrificed and the temperature range of operation is limited.

In view of the above, it would be highly desirable to have an integrated pressure sensor that would alleviate design and performance deficiencies of pressure sensor 10.

## Summary of the Invention

The present invention provides an integrated wafer-bonded semiconductor sensor comprising:

a first semiconductor substrate having a cavity formed in a first surface thereof; and

a second semiconductor substrate bonded to first substrate, the portion of said second substrate disposed over said cavity operating as a diaphragm.

A wafer-bonded semiconductor sensor includes a first semiconductor substrate having a cavity formed in a first surface thereof and a second semiconductor substrate bonded to the first surface of the first substrate. The portion of the second substrate disposed on the cavity then operates as a diaphragm. A silicon-on-insulator device is formed by disposing an insulating layer between the first and second substrates.

## Brief Description of the Drawings

FIG. 1 is a highly enlarged cross-sectional view of a prior art pressure sensor;
FIG.2 is a highly enlarged cross-sectional view of a semiconductor sensor in accordance with the present invention; and
FIG. 3 is a highly enlarged cross-sectional view of a capacitive semiconductor sensor in accordance with the present invention.

## Detailed Description of the Preferred Embodiment

FIG. 2 is a highly enlarged cross-sectional view of a semiconductor sensor 20 in accordance with the present invention. Sensor 20 includes a first semiconductor substrate 22. As disclosed herein, first semiconductor substrate 22 comprises P type monocrystalline silicon and has a resistivity on the order of 8 to 15 ohm cm. However, it should be understood that the material of which substrate 22 is comprised is not of particular importance. Substrate 22 includes a first surface 24 having a cavity 26 disposed therein. Cavity 26 is preferably formed by anisotropic silicon etching with a potassium hydroxide (KOH) solution. Cavity 26 may have a depth on the order of 1 to 20 micrometers.

Sensor 20 also includes a second semiconductor substrate 28. As shown herein, second substrate 28 comprises N type monocrystalline silicon and has a resistivity on the order of 0.5 to 8 ohm cm. A piezo resistive region 30 is formed in the first surface 32 of substrate 28. As shown, piezo resistive region 30 is P type and may have a dopant concentration in the range of $10^{16}$ to $10^{20}$ atoms/cc. Although piezo resistive region 30 is shown as a single region herein, it should be understood that it may comprise multiple regions. Also shown disposed in substrate 28 are P + regions 34. Regions 34 serve to isolate active circuit areas 36 and the like. However, trench isolation technology may be substituted in place of P + regions 34. Typically, signal processing circuitry or the like necessary for the operation of sensor 20 may be formed in active circuit areas 36. This results in an integrated sensor 20.

First surface 24 of substrate 22 and substrate 28 are bonded together. This wafer bonding is preferably done in accordance with the method taught by U.S. Patent 4,818,323 entitled "Method of Making a Void Free Wafer Via Vacuum Lamination" issued to Frank Secco d'Aragona and H. M. Liaw on April 4, 1989. This patent is hereby incorporated by reference.

As shown, an insulating layer 38 is disposed between substrates 22 and 28 and is employed in the wafer bonding process although substrates 22 and 28 may be bonded without the use of insulating layer 38. If substrates 22 and 28 are directly bonded without an insulating layer therebetween, sensor 20 would be strictly piezo resistive. As shown herein, insulating layer 38 comprises silicon dioxide that is formed on either substrate 22 or 28 prior to wafer-bonding. Insulating layer 38 may vary in thickness although as shown herein, it has a thickness on the order of 1 micrometer. The use of insulating layer 38 creates a silicon-on-insulator structure wherein substrates 22 and 28 are dielectrically isolated from each other.

The portion of substrate 28 disposed above cavity 26 is the diaphragm 40 which includes piezo resistive region 30 herein. Diaphragm 40 may be on the order of 0.5 to 20 micrometers thick although it has a thickness on the order of 2 micrometers herein. This thickness may be governed by thinning wafer 28 following wafer bonding. It should be understood that a thinner diaphragm 40 results in a more sensitive sensor 20.

FIG. 3 is a highly enlarged cross-sectional view of a capacitive semiconductor sensor 42 in accordance with the present invention. Sensor 42 includes a first substrate 44 having a first surface 46. Substrate 44 comprises monocrystalline silicon herein and may be either P + or N + with a dopant concentration on the order of $10^{19}$ atoms/cc. A cavity 48 is formed in first surface 46 of substrate 44. As shown herein, cavity 48 has a depth on the order of 1 to 4 micrometers, although it may be as deep as 20 micrometers, and is formed in the same manner as cavity 26 of FIG. 2.

Sensor 42 also includes a second substrate 50 comprising monocrystalline silicon herein. Substrate 50 is N type and has a dopant concentration in the range of $5 \times 10^{14}$ to $10^{17}$ atoms/cc. P + regions 52 isolate an active circuit area 54 where signal processing circuitry or the like may be formed. Again, P + regions 52 may be replaced with trench isolation technology. Although sensor 42 is shown to be integrated herein, it should be understood that the present invention may be employed monolithically. A P + region 56 is formed in substrate 50 by implantation or other known method. P + region 56 has a dopant concentration of at least $10^{19}$ atoms/cc and may be formed before or after the bonding step to be explained presently.

Substrates 44 and 50 are bonded together in the same manner as set forth above. A silicon dioxide insulating layer 58 is disposed between substrates 44 and 50 resulting in sensor 42 having a silicon-on-insulator structure. P + region 56 is disposed above cavity 48 and serves as the diaphragm of sensor 42. The diaphragm has a preferred thickness on the order of 2 micrometers although it may be as thick as 20 micrometers. As well as serving as the diaphragm, P + region 56 also serves as the top plate of a capacitor 58. The portion of substrate 44 disposed beneath cavity 48 serves as the bottom plate of capacitor 58. Capacitor 58 enables the capacitive function of sensor 42.

A variation of sensor 42 does not include P + region 56. A trench is formed in the portion of substrate 50 disposed above cavity 48. The trench is then filled with metal that serves as the top plate of capacitor 58.

The silicon-on-insulator structures depicted by FIGs. 2 and 3 has many advantages. Because the circuitry of second substrates 28 and 50 is completely isolated from first substrates 22 and 44, parasitics are substantially eliminated which allows for much better performance. Further, latch-up is reduced and the device isolation allows for higher package density. Additionally, hardness radiation is improved and a wider temperature range of operation is obtained.

The flexure of diaphragms 40 and 56 is basically dependent upon the depth of cavities 26 and 48 and the thicknesses of diaphragms 40 and 56. The flexure of diaphragms 40 and 56 of sensors 20 and 42 as shown is sensitive to pressure. If cavities 26 and 48 of sensors 20 and 42 are maintained under vacuum, sensors 20 and 42 may operate in an absolute mode. If cavities 26 and 48 are not maintained under vacuum the sensor will operate effectively in a differential mode. Sensors 20 and 42 may be modified from pressure sensors to either weight sensors or accelerometers by disposing a mass on diaphragms 40 and 56. Again, sensors 20 and 42 will operate in an absolute mode if cavities 26 and 48 are maintained under vacuum.

The structures and processing of sensors 20 and 42 have a great number of advantages. As mentioned earlier the thickness of diaphragms 40 and 56 may be controlled because second substrates 28 and 50 may be thinned following wafer bonding. This allows for better control of the thickness of substrates 28 and 50. The closed cavity design of sensors 20 and 42 allows substrates 28 and 42 to be more agressively thinned without having fragility or breakage problems. This enables a more sensitive sensor 20. Much less process time is required to form cavities 26 and 48 because they are shallow and require less etching time. The closed, shallow cavity configuration of sensors 20 and 42 also allow for greater overpressure protection than the prior art because the thicknesses of the portions of first substrates 22 and 44 beneath cavities 26 and 48 act as a stop and prohibits cracking of the silicon.

**Claims**

1. An integrated wafer-bonded semiconductor sensor (20, 42) comprising:
   a first semiconductor substrate (22, 44) having a cavity (26, 48) formed in a first surface (46) thereof; and
   a second semiconductor substrate (36, 54) bonded to first substrate, the portion of said second substrate (36, 54) disposed over said cavity (26, 48) operating as a diaphragm (49, 56).

2. The sensor (42) of claim 1 wherein the cavity (26, 48) is on the order of 1 to 20 micrometers deep.

3. The sensor (42) of claim 1 or 2 wherein the diaphragm (56) is on the order of 0.5 to 20 micrometers thick.

4. The sensor of any preceding claim wherein the diaphragm (56) includes a region having a dopant concentration of at least $10^{19}$ atoms/cc.

5. The sensor of any preceding claim, including an insulating layer (38, 58) disposed on a first surface (46) of said first substrate (44); and
   said second substrate (54) bonded to said insulating layer (58) wherein the portion of said second substrate (54) above said cavity (48) operates as a diaphragm (56).

6. The sensor (42) of claim 5 wherein the insulating layer (38, 58) comprises silicon dioxide, the first substrate (44) comprises P-type monocrystalline silicon having a resistivity on the order of 8 to 15 ohm centimeters and the second substrate (54) comprises N-type monocrystalline silicon having a resistivity on the order of 0.5 to 8 ohm centimeters.

7. The sensor (42) of claim 5 wherein the insulating layer (38, 58) comprises silicon dioxide, the first substrate (44) comprises P + or N + type monocrystalline silicon and has a dopant concentration on the order of $10^{19}$ atoms/cc, and the diaphragm (56) includes a P + type region having a dopant concentration on the order of $10^{19}$ atoms/cc.

# FIG. 1
-PRIOR ART-

# FIG. 2

# FIG. 3